# EUROPEAN PATENT APPLICATION

(11) **EP 4 379 360 A1**
(43) Date of publication of application: **05.06.2024**
(21) Application number: 22211208.8
(22) Date of filing: 02.12.2022
(51) Int. Cl.: G01N 21/84, G01B 11/06

(54) **SINGLE-SIDED REFLECTANCE MEASUREMENT APPARATUS**

(71) Applicant: Covestro (Netherlands) B.V., 6167 RD Geleen (NL)
(72) Inventor: Biesmans, Kay, 6441 CL Brunssum (NL); Aben, Geert, 6065 BN Montfort (NL)
(74) Representative: Levpat

(57) **Abstract**

The present invention provides apparatus for the measurement of reflectance from a surface, said apparatus comprising:
a) a housing;
b) an array of at least 2 light emitters arranged in the housing;
c) an array of at least 2 light receivers arranged in the housing;
d) a spectrometer connected to each of the light receivers; and
e) a data output device connected to the spectrometer;
wherein each light receiver is configured to receive light, which light is emitted from one or more light emitter and reflected from the surface to be measured.
f) optionally a means of transporting over the module surface
wherein each light receiver is configured to receive light, which light is emitted from one or more light emitter and reflected from the surface to be measured; a method of measuring the reflectance of a surface, which method comprises passing an apparatus across the surface and interpreting the data output by the data output device; a method of estimating the thickness of a coating on a surface; and a method of measuring the average increase in reflectance of a photovoltaic module by applying an antireflective coating to the surface of the photovoltaic module.

## Description

The present invention relates to apparatus for measuring the reflectance of a flat surface. The apparatus is useful in measuring the thickness of a coating on a surface, in particular the thickness of an anti-reflective coating on a photovoltaic module installed in the field.

When installed in the field, photovoltaic modules are subject to environmental conditions and cleaning operations, which can lead to damage of the surface, for example scratching or erosion of coatings. This effect can lead to a reduction in transmission of sunlight through the front surface of the module. It is desirable to maximize the amount of light transmitted in order to increase light incident on the photovoltaic cells and therefore increase the electrical energy output of the module. The amount of light transmitted is inversely proportional to the amount of light reflected from the surface. Accordingly measurement of the reflectance of light can be used to determine the degree of light transmittance.

Typically a photovoltaic module comprises a transparent front cover of glass. In more recent years the glass comprises an antireflective coating on the outside surface, which coating can increase light transmission by up to 4%. Measurement of surface reflection can also be used to determine the presence, absence or condition of an anti-reflective coating. An anti-reflective coating may also be applied in the field, to modules which were produced and installed without an anti-reflective coating or where the anti-reflective coating has been removed or damaged. Measurement of surface reflection can then be used to determine whether the anti-reflective coating has been adequately applied, for example whether it has been applied at the desired thickness or evenly enough.

Reflectance measuring devices are known in the art. For example, a simple device involves a light source and a photodetector arranged in a housing such that the photodetector receives light emitted from the light source and reflected from the surface to be measured. Light may be transmitted from the light source to the housing by fiber optic cable and transmitted from the housing to the photodetector by fiber optic cable. A spectrometer can be attached to analyze the resulting signal. The AFH-15 angle fiber holder from Avantes is an example of a housing for a reflectance device having a single light emitter and single light receiver. A drawback with such a device is that it illuminates a very small surface area, typically less than 2 mm², and measures reflectance only from this area. Since reflectance can vary significantly between sample areas due to variations in the front surface glass and any coating, multiple readings are required in order to give an impression of the reflectance of the entire surface of a photovoltaic module, which is typically of the order of 1.7 m². This involves moving the device manually, recording readings, and processing the multiple readings to give useful data. Such a manual process is time consuming and cumbersome. Moreover, moving such a device across the surface may cause damage to the present coating or to the optic fibers of the device, which are very fragile and scratching of the surface to be measured, affecting the reflectance.

US2018/0145628 describes a portable light reflectance sensor which has a light source adapted to illuminate an at least 1 cm² surface area of the photovoltaic module. The relatively large illuminated area spatially integrates surface features over the area covered by the illuminated region, thereby giving a more representative reflectance measurement. The sensor includes a signal processing circuit. The sensor may be used to compare reflectance of a surface before and after applying a coating, and may further be integrated into the design of an apparatus for coating a surface of a photovoltaic module. However, the large illuminated area means that reflectance is measured not only from the first reflection (between air and coating or air and glass) but from the total reflection (between glass and encapsulant or between encapsulant and active layer). Significant variations in the total reflection of a (non-coated) solar module occur due to the variation in the surface of the active layer, including layer thickness of the active layer, EVA (ethylene vinyl acetate), metal busbars and fingers and also gaps between cells. This variation significantly affects the overall reflection measured. Accordingly, an accurate comparison of reflection before and after coating a photovoltaic module can only be achieved by measuring reflection in exactly the same location before and after coating. A further drawback of the device of US2018/0145628 is that it is relatively large, and as illustrated is moved by machine carrying out coating. This makes it very difficult to measure the same position before and after coating.

There remains a need in the art for an improved reflectance detector which can be used to quickly and accurately measure reflectance of a large surface area and which can be manipulated easily by hand. There also remains a need for a method which allows the estimation of coating properties which determine the reflectance. The above deficiencies may be reduced or overcome by the inventions disclosed herein.

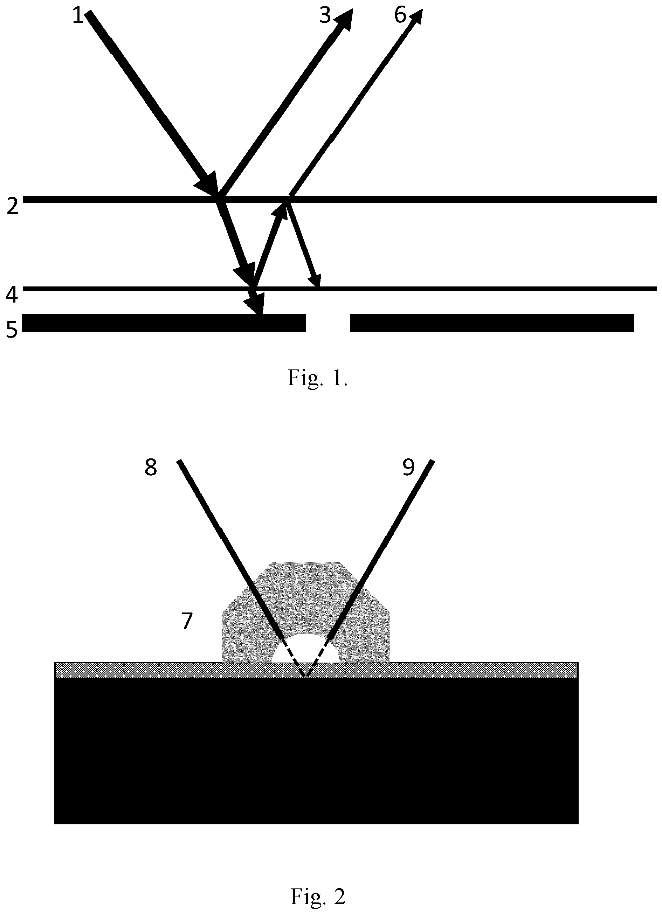

Fig. 1. illustrates the mechanism of reflections on a photovoltaic module, wherein sun rays 1 meet on a first boundary layer 2 between air and glass of a photovoltaic module and is partially reflected as first reflection 3. The partially reflected sun ray then meets a second boundary layer 4 between the glass of the photovoltaic module and the layer comprising the photovoltaic cells 5 (encapsulant) and is partially reflected as second reflection 6 before meeting the photovoltaic cells 5. A further reflection of the sun ray occurs at the photovoltaic cell 5 which is not shown in Fig. 1.
Fig. 2. illustrates an embodiment of the prior art of a reflectance measurement apparatus 7 comprising a single light emitter 8 and single light detector 9.

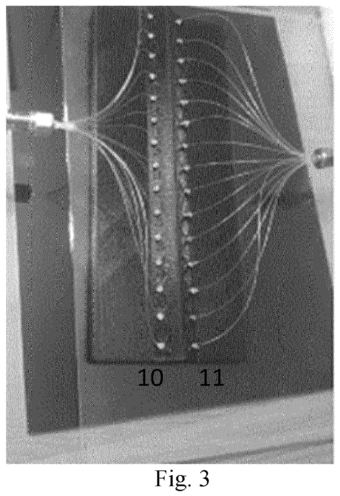

Fig. 3. illustrates the underside of an embodiment of the present invention showing an array of light emitters 10 and an array of light receivers 11 in form of a line.
Fig. 4. Illustrates the underside of an embodiment of the present invention showing an array of light emitters 10 and an array of light receivers 11 in form of concentric circles.
Fig. 5 illustrates an example of a plot of reflectance R against wavelength λ displayed on the apparatus.
Fig. 6. Illustrates an external view of an embodiment of the present invention on a photovoltaic module, wherein the inventive apparatus comprises a handle.

The present invention provides apparatus for the measurement of reflectance from a surface, said apparatus comprising:
a) a housing;
b) an array of at least 2 light emitters arranged in the housing;
c) an array of at least 2 light receivers arranged in the housing;
d) a spectrometer connected to each of the light receivers; and
e) a data output device connected to the spectrometer;
f) optionally means of transporting the apparatus over the surface
wherein each light receiver is configured to receive light, which light is emitted from one or more light emitter and reflected from the surface to be measured.

The present invention further provides a method of measuring the reflectance of a surface, which method comprises passing an apparatus as defined herein across the surface and interpreting the data output by the data output device. The interpretation of the data is carried out by comparison of the reflectance of a coated surface with the reflectance of a similar but non-coated surface, wherein the measured reflectance of the non-coated surface represents 100%. The difference between the 100% of the non-coated surface and the measured reflectance of the coated surface indicates the effect of the coating.

The present invention further provides a method of estimating the thickness of a coating on a surface, which method comprises:
a) passing an apparatus as defined herein across the surface;
b) recording data output from the data output device;
c) comparing the data output from the data output device with data derived from a model of the coated surface;
d) estimating the thickness of the coating from the comparison in step c).

The present invention further provides a method of measuring the average increase in reflectance of a photovoltaic module by applying an antireflective coating to the surface of the photovoltaic module, which method comprises:
1) passing an apparatus as defined herein across the coated surface of the photovoltaic module and recording a value from the data output by the data output device;
2) comparing the value recorded in step 1) with a value of a reference. The value of the reference can either be obtained by carrying out the steps a) and b) for the same photovoltaic module prior to the coating, for a non-coated photovoltaic module with similar surface glass than the photovoltaic module in step a), by a simulation prepared for a non-coated photovoltaic module with similar surface glass than the photovoltaic module in step a) or on a standalone surface which is not incorporated in a module, e.g. a glass plate, which is preferably the same type of surface as of the measured photovoltaic module in step 1).

As used herein the housing means one or more components which holds the light emitters and light receivers in the desired position with respect to each other and with respect to the surface to be measured. Typically the light emitters and light receivers are arranged in the housing by insertion into holes through the wall of the housing. Typically, the light emitter or light receiver is fitted into the housing such that no light escapes between the light emitter or light receiver. The housing may also comprise a light shield. A light shield is used to minimize the amount of light entering the apparatus from outside and to minimize the amount of light emitted by the light emitters and escaping the apparatus. In this respect the light shield preferably forms a seal with the surface to be measured.

Typically, the number of light receivers is identical to the number of light emitters and each light receiver is configured to receive light, which light is emitted from one light emitter and reflected from the surface to be measured.

Typically, the apparatus comprises at least 5 light emitters and an identical number of light receivers. Preferably, the apparatus comprises at least 10 light emitters and an identical number of light receivers. More preferably the apparatus comprises at least 15 light emitters, yet more preferably at least 20 light emitters, or even at least 30 light emitters. The larger the number of light emitters the better averaged the reflection value. The upper limit of the number of light emitters is limited only by practical considerations. It is desired not to make the device too large that it cannot easily be moved by hand. Preferably, the apparatus comprises at most 100 light emitters. More preferably, it comprises at most 80 light emitters, for example at most 60 light emitters or at most 40 light emitters.

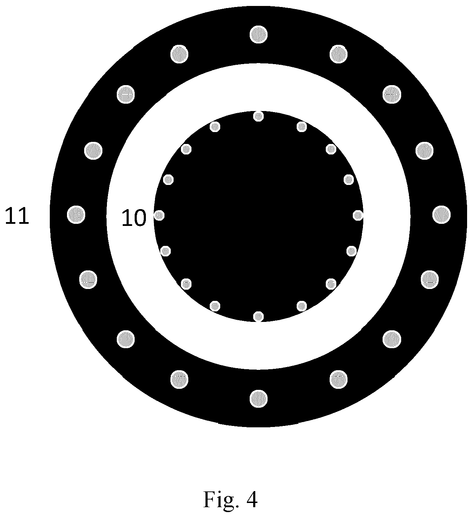

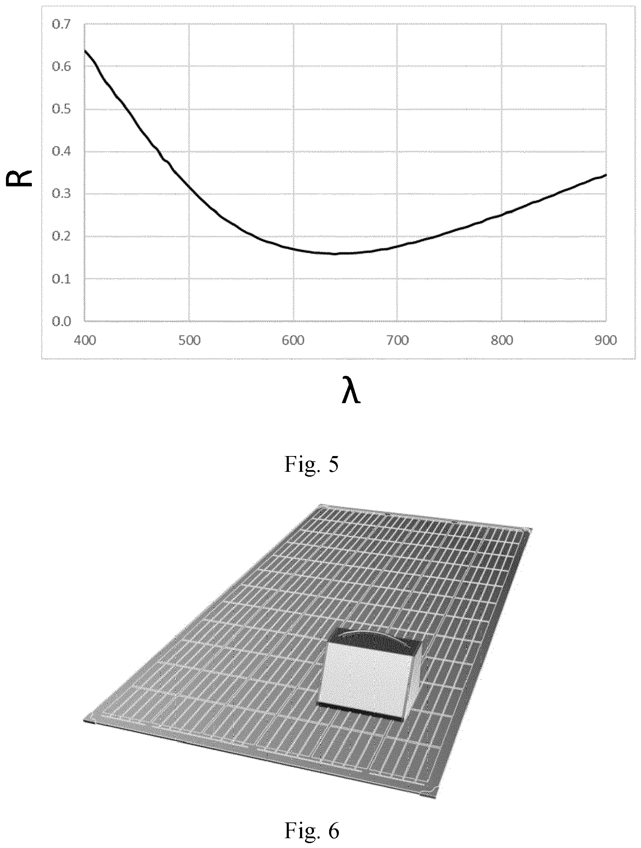

As used herein, array means a configuration of multiple objects; namely the light emitters or the light receivers. An array may define an area or a shape. A typical array is a line. Typically the array of light emitters is in a plane parallel to the surface to be measured. Typically, the array of light receivers is in a plane parallel to the surface to be measured. Preferably, the array of light emitters is in a plane parallel to the surface to be measured and the array of light receivers is in a plane parallel to the surface to be measured. Preferably, said array of light emitters and said array of light receivers form parallel lines. Said lines may be straight, like in Fig. 4, or curved. They may also be in the form of concentric circles with, for example, the light emitters being arranged in an inner circle and the light receivers being arranged in an outer circle. An example for such an embodiment is shown in Fig. 5. Typically, the array of light receivers is identical to the array of light emitters. Preferably, the array of light receivers is a mirror image of the array of light emitters.

Light emitted from a light emitter falls on the surface to be measured. Typically, the angle of light incident on the surface is from 10 to 50°. This means the angle from a normal with the surface is from 10 to 50°. Preferably, the angle is from 15 to 45°, more preferably from 20 to 40°, more preferably about 30°.

The wavelength of light emitted by the light emitters can be selected to desired ranges through the choice of light source and the use of filters. A light emitter may be a light source, or may be connected to a light source, for example by optical fiber. Preferably, the apparatus comprises a light source, which light source is connected by optical fiber to each light emitter. A bundle of optical fibers may leave the light source and be split into sub-bundles which connect to each of the light emitters. Accordingly, a single light source may provide light to one, many or all light emitters in the apparatus. The light source may be for example an incandescent bulb or a LED. The light emitter may be for example the end of a fiber optic cable.

For measuring the reflectance of a surface of a photovoltaic module, a wavelength range corresponding to the most intense part of the solar spectrum is desirable. Typically, the light emitted by the light emitters has a wavelength of from 100 to 1800 nm. Preferably, the range of wavelength of emitted light is from 150 to 1200 nm or more preferably from 200 to 1000 nm.

Each light receiver is configured to receive light, which light is emitted from one light emitter and reflected from the surface to be measured. In other words, each light receiver is arranged such that it is directed at the surface, at the point where light emitted from a light emitter is directed. Each light receiver is arranged such that it receives the maximum amount of light reflected from the light emitter. In this way a light receiver and light emitter form a pair.

The spectrometer is connected to the light receivers. Connection is typically by optical fiber. Preferably, each light receiver is connected by optical fiber to the spectrometer. Therefore, the spectrometer may receive a total light input which is equivalent to the sum of the light received by the light receivers. A bundle of optical fibers connected to the spectrometer may be split into sub-bundles, each of which connect to a light receiver. In this way light received from one, many or all the light receivers in the apparatus may be passed to the single spectrometer in the apparatus. A light receiver may therefore be the end of a fiber optic cable. The spectrometer is typically integrated into the housing.

The light emitted from a light emitter falls on the surface to be measured and is reflected therefrom. Accordingly the light defines an area on the surface. If the angle of incidence of the emitted light is close to 0° the area typically approaches a circle. As the angle of incidence increases, said area is typically elliptical; thereby having a shortest diameter and longest diameter. Typically the area has a shortest diameter of from 50 to 500 µm. Preferably, the light emitted from any one light emitter is reflected from the surface over an area having a shortest diameter of from 100µm to 400µm. More preferably the light emitted from any one light emitter is reflected from the surface over an area having a shortest diameter of from 150 to 300 µm, for example from 200 to 250 µm.

The portion of the apparatus in which the array of light emitters and the array of light receivers is located may form a small part of the apparatus itself. In order to record an accurate reflection value, this portion of the apparatus should be kept at a constant distance and orientation from the surface to be measured. In one embodiment, the apparatus comprises an independently moveable portion of the housing, in which the array of light emitters and array of light receivers are housed. The movement is typically orientation of the portion of the housing relative to the remainder of the housing. This may be achieved, for example, by a simple pivot or a gimbal. The independently moveable portion of the housing may be guided at a fixed distance from the surface, for example by a set of wheels, rollers or manually by a handle.

A spectrometer is standard and small enough to fit in a moveable apparatus, as known to the person skilled in the art. The spectrometer must be able to detect light of the wavelength received by the light receiver. The spectrometer outputs an electrical signal to the data output device.

The data output device is connected to the spectrometer. The data output device comprises a means for converting the electrical signal output from the spectrometer to data which can be interpreted by an operator. Typically, the data output device comprises a signal processing unit and a display. Preferably, the data output device further comprises a control panel. Instead of or additional to a display, the data may be output wirelessly, for example by radio to a personal computer or handheld device for display of data or manipulation of the apparatus. Equally, control of the data output device may be carried out wirelessly on a personal computer or handheld device. The data output device is typically integrated into the housing and preferably comprises an e-ink display together with a keyboard and a touchpad. Where present, the separate device is selected such that it is visible in bright sunlight; the conditions under which the device may often be used. Ideally the separate device is a tablet having an e-ink display. Optionally it may be reversibly attachable to the housing.

The data output device is capable of comparing measurements taken with other measurements and with model data provided to the data output device.

One preferred form of data output is a number representing currently measured reflectance of the surface. Another preferred form of data output is a number representing estimated thickness of a coating in the current position of the apparatus or estimated porosity of a coating in the current position of the apparatus. Said estimates are achieved by comparing data acquired with a model of the surface and coating. Another preferred form of data output is a plot of reflectance against wavelength, like e.g. shown in Fig. 5. An alternative output of data is a chart of all values of a parameter against their frequency of occurrence. This could be for example a continuous distribution or alternatively it could be broken down into categories, for example every 10% of the value index.

As the apparatus is moved across the surface, data can be recorded in an instant or over a time period. If data is recorded over a time period while the apparatus is moving, then the area of the surface over which light is reflected is effectively increased in the direction of travel of the apparatus. This has the advantage of averaging the reflectance recorded over a larger area without introducing a second reflectance as described above. Typically, in the present invention, data is collected over a time period of from 0.01 to 5.0 seconds, wherein the measurement is a cumulation of data collection. Preferably, in the present invention, data is collected over a time period of from 0.05 to 0.2 seconds, for example 0.3 seconds.

The apparatus is intended to be light enough and small enough to be handheld and (re-)positioned by hand. It may comprise a handle attached to or integrated with the housing, like e.g. shown in Fig. 6. Typically, the apparatus further comprises a guidance system. A guidance system is a way to move the apparatus in a controlled direction and speed and in a smooth manner. It may comprise wheels, tracks or a rack which the apparatus follows. Typically the guidance system comprises wheels. Preferably, the guidance system comprises a set of wheels and a motor configured to drive at least one wheel. In this way the operation of the apparatus can be at least partially automated.

The apparatus may further comprise a battery, which may be used to power one or more of the light source, the spectrometer, the data output device and the motor. Typically the battery is rechargeable and easily removable.

Typically the apparatus is passed across the surface by moving along a guidance system, for example rolling along the wheels. The data output by the data output device can be assessed by the operator and recorded. Appropriate action can then be taken. For example, one application is in determining whether or not an antireflective coating has been applied adequately to the surface of a photovoltaic module. The operator can compare the reflectance data output with a control data set, for example from a correctly coated module and/or an uncoated module to determine this. Alternatively, the signal processing unit can compare measured data with data for a model of the photovoltaic module and coating (if present) and could output an estimate of certain parameters of the coating. Those parameters could be one or more of coating thickness, coating porosity, refractive index of the coating, or simply reflectance. The operator could then interpret this data to determine the quality of the coating. Alternatively, the signal processing unit could calculate the difference between measured or estimated parameters and modelled parameters, for example of an uncoated module, and output a measure of the quality of the coating.

In one embodiment, the invention is used to estimate the thickness of a coating. This embodiment can also be used to estimate the thickness at different portions of the surface of a photovoltaic module. This method could then be used to determine whether the coating on a module has degraded; by what degree it has degraded; and whether it has sufficiently degraded to require a further coating. Coating could then be applied either locally or globally on the surface of the photovoltaic module. The apparatus could be used again to determine the thickness of the coating on the newly coated photovoltaic module.

Building a model is achieved in suitable software by inputting measured values and then interpolating and extrapolating these values as required. Data from the model may then be used for comparison in the present invention.

Data output by the data output device could be reflectance of the surface. Alternatively, the signal processing unit can compare the measured data with the data derived from a model, and the data output device can output a comparison of this data. For example it could be a comparison of reflectance or a comparison of thickness, porosity or refractive index of the coating, or a combination of these parameters.

In one embodiment, the apparatus is used to record a value before coating a photovoltaic module and to record a value after coating a photovoltaic module. The coating may be applied by techniques known in the art, for example by spraying or by painting or rolling the coating. Typically the coating requires at least 30 minutes to dry in ambient conditions, dependent on the weather. In this embodiment, the data may be output by the data output device. Alternatively, the signal processing unit could calculate the difference between the measured reflectance before coating and after coating and the data output device could output this difference.

## Claims

1. Apparatus for the measurement of reflectance from a surface, said apparatus comprising:
a) a housing;
b) an array of at least 2 light emitters arranged in the housing;
c) an array of at least 2 light receivers arranged in the housing;
d) a spectrometer connected to each of the light receivers; and
e) a data output device connected to the spectrometer;
wherein each light receiver is configured to receive light, which light is emitted from one or more light emitter and reflected from the surface to be measured.
f) optionally a means of transporting over the module surface

2. Apparatus according to claim 1, wherein the number of light receivers is identical to the number of light emitters and each light receiver is configured to receive light, which light is emitted from one light emitter and reflected from the surface to be measured.

3. Apparatus according to claim 1 or claim 2, which comprises at least 10 light emitters and an identical number of light receivers.

4. Apparatus according to any one of claims 1 to 3, wherein the array of light emitters is in a plane parallel to the surface to be measured and the array of light receivers is in a plane parallel to the surface to be measured.

5. Apparatus according to any one of claims 1 to 4, wherein the angle of light emitted by a light emitter is incident on the surface at from 10 to 50°.

6. Apparatus according to any one of claims 1 to 5, comprising a light source, which light source is connected by optical fiber to each light emitter.

7. Apparatus according to any one of claims 1 to 6, wherein each light receiver is connected by optical fiber to the spectrometer.

8. Apparatus according to any one of claims 1 to 7, wherein the light emitted by the light emitters comprises light with a wavelength of from 200 to 1000 nm.

9. Apparatus according to any one of claims 1 to 8, wherein the light emitted from any one light emitter is reflected from the surface over an area having a shortest diameter of from 10µm to 400µm.

10. Apparatus according to any one of claims 1 to 9, wherein the data output device comprises a signal processing unit and a display.

11. Apparatus according to any one of claims 1 to 10, further comprising a guidance system.

12. Apparatus according to claim 10, wherein the guidance system comprises a set of wheels and a motor configured to drive at least one wheel.

13. A method of measuring the reflectance of a surface, which method comprises passing an apparatus as defined in any one of claims 1 to 12 across the surface and interpreting the data output by the data output device.

14. A method of estimating the thickness of a coating on a surface, which method comprises:
a) passing an apparatus as defined in any one of claims 1 to 12 across the surface;
b) recording data output from the data output device;
c) comparing the data output from the data output device with data derived from a model of the coated surface;
d) estimating the thickness of the coating from the comparison in step c).

15. A method of measuring the average increase in reflectance of a photovoltaic module by applying an antireflective coating to the surface of the photovoltaic module, which method comprises:
1) passing the apparatus defined in any of claims 1 to 12 across the coated surface of the photovoltaic module and recording a value from the data output by the data output device;
2) comparing the value recorded in step 1) with a value of a reference.
